# EUROPEAN PATENT APPLICATION

(11) **EP 1 548 734 A1**
(43) Date of publication of application: **29.06.2005**
(21) Application number: 04106928.7
(22) Date of filing: 23.12.2004
(51) Int. Cl.: G11B 20/10, H04L 29/02, G10H 1/00, G10H 5/00

(54) **Electronic music apparatus, control method therefor, and program for implementing the control method**

(30) Priority: 26.12.2003 JP 2003434466
(71) Applicant: YAMAHA CORPORATION, Hamamatsu-shi, Shizuoka-ken 430-8650 (JP)
(72) Inventor: Yanase, Tsutomu, Hamamatsu-shi, Shizuoka 430-8650 (JP); Umezawa, Satoru, Hamamatsu-shi, Shizuoka 430-8650 (JP); Shibukawa, Takeo, Hamamatsu-shi, Shizuoka 430-8650 (JP)
(74) Representative: Kehl, Günther

(57) **Abstract**

An electronic music apparatus which can simplify the operating procedure for reproduction of sample contents. When a user designates a sample content as an object for download distribution using a setting operator, the sample content is distributed by download distribution and received by the electronic music apparatus. The received sample content is stored in a storage medium, and automatically read out from the storage medium and stored in a temporary memory. The sample content stored in the temporary memory is automatically reproduced.

## Description

### BACKGROUND OF THE INVENTION

### Field of the Invention

The present invention relates to an electronic music apparatus which is capable of handling sample contents and regular contents, a control method therefor, and a program for implementing the control method.

### Description of the Related Art

Conventionally, there have been known electronic music apparatuses which are capable of handling sample contents and regular contents.

Such electronic music apparatuses include one which stores a sample content that has been distributed, in a RAM (Random Access Memory), and in response to an instruction for starting reproduction from a user, reproduces the sample content (see Japanese Laid-Open Patent Publication (Kokai) No. 2001-350479, for example).

On the other hand, conventional methods of distributing regular contents which are not sample contents include download distribution and streaming distribution. The download distribution is a method in which when an electronic music apparatus requests a server to distribute regular contents held in the server, the server distributes the regular contents by causing the electronic music apparatus to collectively download the regular contents. The streaming distribution is a method in which the server distributes regular contents by causing the electronic music apparatus to download the regular contents in the same way as the download distribution, but the electronic music apparatus reproduces the regular contents at the same time when they are downloaded, as is distinct from the download distribution.

However, among the above conventional electronic music apparatuses, the electronic music apparatus which reproduces a sample content does not start reproduction unless the user gives an instruction for reproduction. Thus, the operating procedure for reproduction involves many steps and is complicated. Further, sample contents can be only reproduced and cannot be used for performance practice or the like.

Moreover, among the conventional electronic music apparatuses, the electronic music apparatus which receives regular contents by streaming distribution also has the disadvantage that the regular contents can be only reproduced and cannot be used for performance practice or the like.

### SUMMARY OF THE INVENTION

It is a first object of the present invention to provide an electronic music apparatus and a control method therefor which can simplify the operating procedure for reproduction of sample contents, and a program for implementing the control method.

It is a second object of the present invention to provide an electronic music apparatus and a control method therefor which can increase the range of usage of sample contents, and a program for implementing the control method.

It is a third object of the present invention to provide an electronic music apparatus and a control method therefor which can increase the range of usage of regular contents, and a program for implementing the control method.

To attain the first object, in a first aspect of the present invention, there is provided an electronic music apparatus comprising a designating device that designates a sample content as an object for download distribution, a receiving device that receives the sample content designated by the designating device and distributed by download distribution, a storage device that stores the sample content received by the receiving device in a storage medium, a temporary memory that temporarily stores the sample content, a readout device that automatically reads out the sample content stored in the storage medium and stores the sample content read out in the temporary memory, and a reproduction device that automatically reproduces the sample content stored in the temporary memory.

To attain the second object, in a second aspect of the present invention, there is provided an electronic music apparatus comprising a designating device that designates a sample content as an object for download distribution and instructs to use the sample content for score display or a performance lesson, a receiving device that receives the sample content designated by the designating device and distributed by download distribution, a storage device that stores the sample content received by the receiving device in a storage medium, a temporary memory that temporarily stores the sample content, a readout device that reads out the sample content stored in the storage medium and stores the sample content read out in the temporary memory, and a control device that is responsive to the instruction to use the sample content stored in the temporary memory for score display or a performance lesson, for providing control to display a score for the sample content or carry out a performance lesson based on the sample content.

Preferably, the sample content has appended thereto usage limitation information indicative of contents of limitation on usage of the sample content, and the control device limits execution of the score display or the performance lesson based on the usage limitation information.

More preferably, the usage limitation information comprises at least one of a number of reproducible bars or parts, a number of displayable bars or parts, and a number of bars or parts that can be subjected to the performance lesson.

To attain the third object, in a third aspect of the present invention, there is provided an electronic music apparatus comprising a designating device that designates a content as an object for streaming distribution and instructs to use the content for score display or a performance lesson, a receiving device that receives the content designated by the designating device and distributed by streaming distribution, a temporary memory that temporarily stores the content received by the receiving device, and a control device that is responsive to the instruction to use the content stored in the temporary memory for score display or a performance lesson, for providing control to display a score for the content or carry out a performance lesson based on the content.

According to the first aspect of the present invention, after a sample content which has been distributed by download distribution is stored in the storage medium, the sample content is read out and stored in (loaded into) the temporary memory, and reproduction of the sample content is automatically started. As a result, merely by instructing download distribution of a sample content, not only download of the sample content is carried out but also reproduction of the same is started.

According to the second aspect of the present invention, after a sample content which has been distributed by download distribution is stored in the storage medium, the sample content is read out and stored in (loaded into) the temporary memory, and score display or a performance lesson is carried out using the sample content. As a result, it is possible to carry out performance practice using sample contents.

According to the third aspect of the present invention, a content which has been distributed by streaming distribution is stored in the temporary memory, and score display or a performance lesson is carried out using the content. As a result, it is possible to carry out performance practice using streaming contents which were conventionally used only for reproduction.

To attain the first object, in a fourth aspect of the present invention, there is provided a control method for an electronic music apparatus, comprising a receiving step of receiving a sample content designated by a designating device that designates the sample content as an object for download distribution and distributed by download distribution, a storage step of storing the sample content received in the receiving step in a storage medium, a readout step of automatically reading out the sample content stored in the storage medium and storing the sample content read out in a temporary memory, and a reproduction step of automatically reproducing the sample content stored in the temporary memory.

To attain the second object, in a fifth aspect of the present invention, there is provided a control method for an electronic music apparatus, comprising a receiving step of receiving a sample content designated by a designating device that designates the sample content as an object for download distribution and instructs to use the sample content for score display or a performance lesson and distributed by download distribution, a storage step of storing the sample content received in the receiving step in a storage medium, a readout step of reading out the sample content stored in the storage medium and storing the sample content read out in a temporary memory, and a control step of providing control to display a score for the sample content stored in the temporary memory or carry out a performance lesson based on the sample content, in response to the instruction to use the sample content for score display or a performance lesson by the designating device.

To attain the third object, in a sixth aspect of the present invention, there is provided a control method for an electronic music apparatus, comprising a receiving step of receiving a content designated by a designating device that designates the content as an object for streaming distribution and instructs to use the content for score display or a performance lesson and distributed by streaming distribution, a temporary storage step of temporarily storing the content received in the receiving step in a temporary memory, and a control step of providing control to display a score for the content stored in the temporary memory or carry out a performance lesson based on the sample content, in response to the instruction to use the content for score display or a performance lesson by the designating device.

Further, to attain the first object, in a seventh aspect of the present invention, there is provided a program for causing a computer to execute the control method according to the fourth aspect.

Further, to attain the second object, in an eighth aspect of the present invention, there is provided a program for causing a computer to execute the control method according to the fifth aspect.

Further, to attain the third object, in a ninth aspect of the present invention, there is provided a program for causing a computer to execute the control method according to the sixth aspect.

The above and other objects, features, and advantages of the invention will become more apparent from the following detailed description taken in conjunction with the accompanying drawings.

### BRIEF DESCRIPTION OF THE DRAWINGS

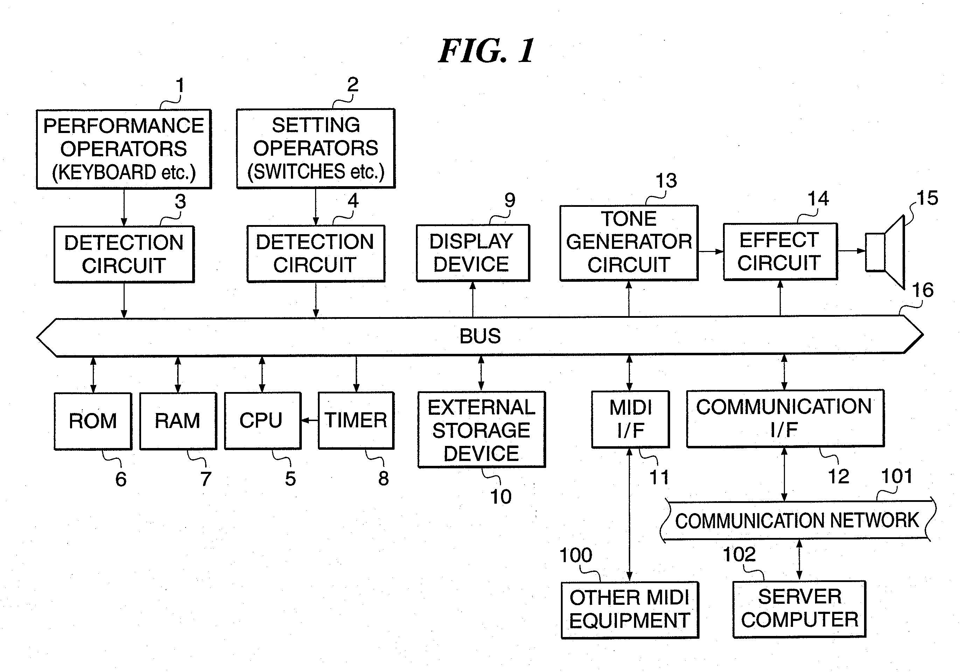

FIG. 1 is a block diagram schematically showing the arrangement of an electronic music apparatus according to an embodiment of the present invention;

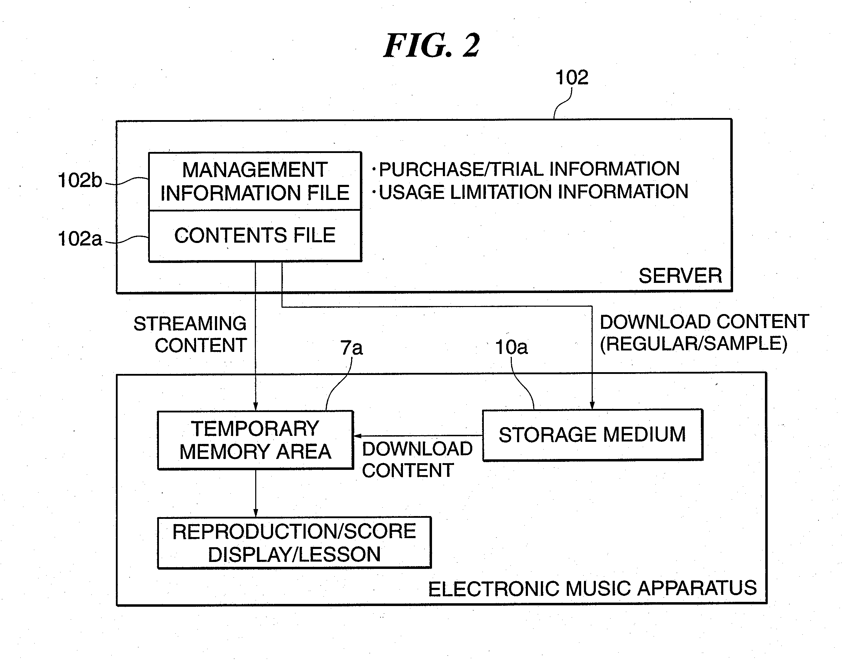

FIG. 2 is a block diagram showing the functional configurations of the electronic music apparatus in FIG. 1 and a server appearing in FIG. 1;

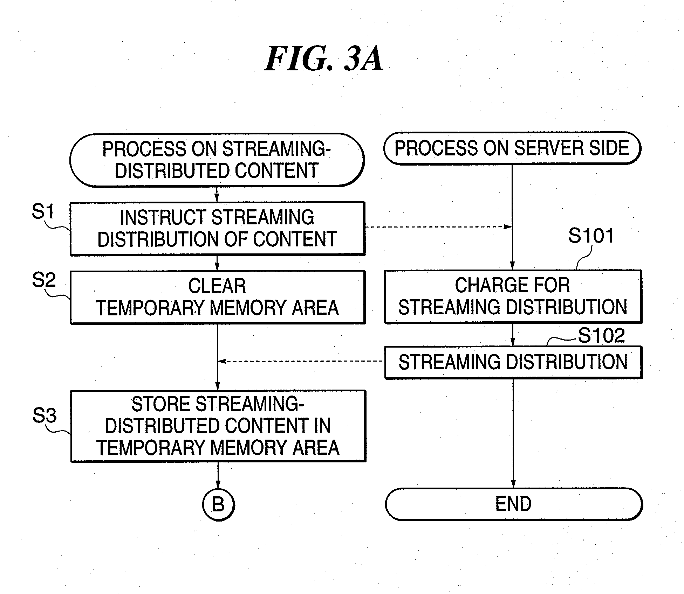

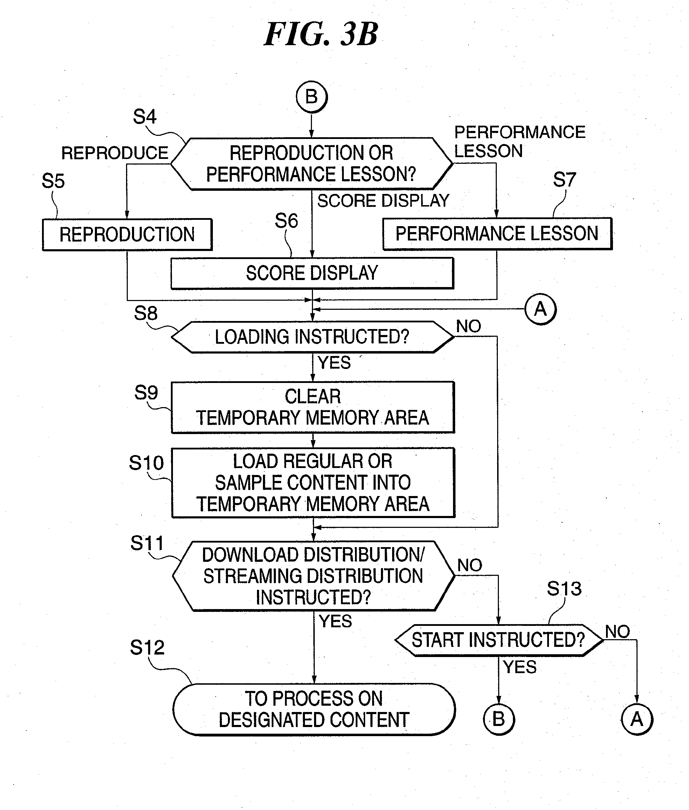

FIGS. 3A and 3B are flowchart showing a process on a content distributed by streaming distribution, executed by the electronic music apparatus in FIG. 1, particularly a CPU thereof, and a process executed by the server in association with the process executed by the electronic music apparatus in FIG. 1;

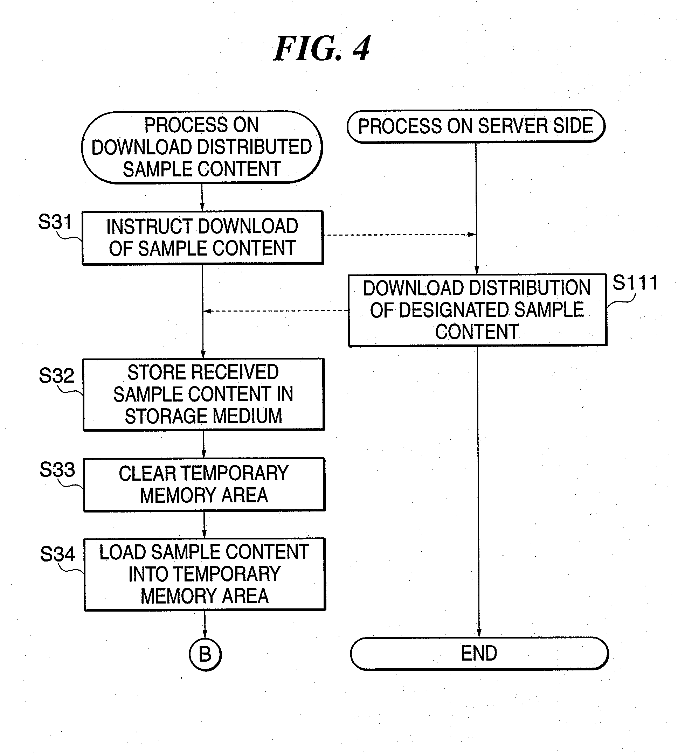

FIG. 4 is a flowchart showing part of a process on a sample content distributed by download distribution, executed by the electronic music apparatus in FIG. 1, particularly the CPU thereof, and a process executed by the server in association with the process executed by the electronic music apparatus in FIG. 1; and

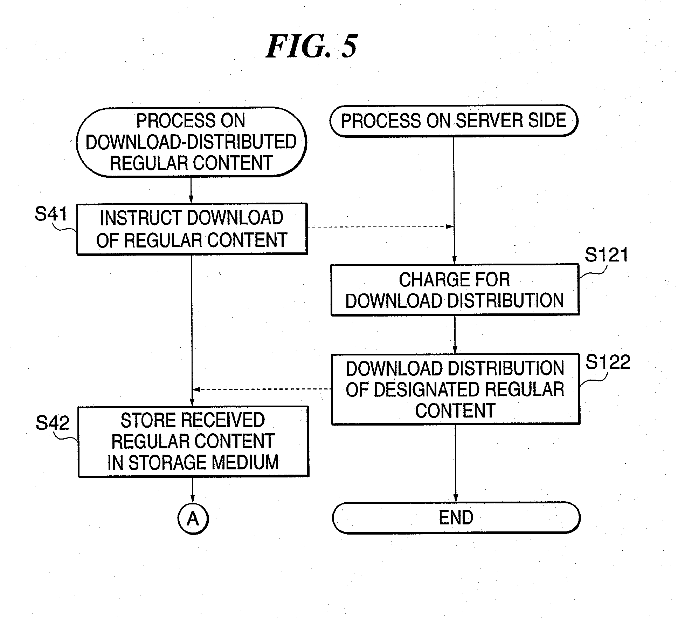

FIG. 5 is a flowchart showing a process on a regular content distributed by download distribution, executed by the electronic music apparatus in FIG. 1, particularly the CPU thereof, and a process executed by the server in association with the process executed by the electronic music apparatus in FIG. 1.

### DETAILED DESCRIPTION OF THE PREFERRED EMBODIMENTS

The present invention will now be described in detail with reference to the drawings showing a preferred embodiment thereof.

FIG. 1 is a block diagram schematically showing the arrangement of an electronic music apparatus according to an embodiment of the present invention.

As shown in FIG. 1, the electronic music apparatus according to the present embodiment is comprised of performance operators 1 including a keyboard for inputting pitch information, setting operators 2 including a plurality of switches for inputting various kinds of information, a detection circuit 3 for detecting operative states of the performance operators 1, a detection circuit 4 for detecting operative states of the setting operators 2, a CPU 5 that controls the entire apparatus, a ROM 6 that stores control programs executed by the CPU 5, various table data, etc., a RAM 7 for temporarily storing performance data, various input information, computation results, etc., a timer 8 that measures interrupt time for timer interrupt processing and various kinds of time, a display device 9 comprised of a liquid crystal display (LCD) or a CRT (Cathode Ray Tube) and light emitting diodes (LEDs), an external storage device 10 that stores various application programs including the control programs, various musical composition data, and various other data, a MIDI interface (I/F) 11 that inputs MIDI (Musical Instrument Digital Interface) signals from external devices and outputs MIDI signals to external devices, a communication interface (I/F) 12 that performs transmission and reception of data to and from a server computer (hereinafter simply referred to as "the server") 102 via a communication network 101, a tone generator circuit 13 that converts performance data input by the performance operators 1, preset performance data, and other data into musical tone signals, an effect circuit that applies various effects to musical tone signals from the tone generator circuit 13, and a sound system 15 that converts musical tones signals from the effect circuit 14 into sounds and is comprised of a DAC (Digital-to-Analog Converter), an amplifier, a speaker, etc.

The above component elements 3 to 14 are connected to each other via a bus 16. A timer 8 is connected to the CPU 5, other MIDI equipment 100 to the MIDI I/F 11, the communication network 101 to the communication I/F 12, the effect circuit 14 to the tone generator circuit 13, and the sound system 15 to the effect circuit 14, respectively.

The external storage device 10 may be implemented, for example, by a flexible disk drive (FDD), a hard disk drive (HDD), a CD-ROM drive, a magnetic-optical disk drive, or the like. The external storage device 10 may store the control programs executed by the CPU 5 as mentioned above. If the control programs are not stored in the ROM 6, they may be stored in the external storage device 10, and by reading out the control programs from the external storage device 10 and storing the same in the RAM, the CPU 5 can operate in the same manner as if the control programs were stored in the ROM 6. This enables adding control programs and upgrading the version of the control programs with ease.

The MIDI I/F 11 need not be a dedicated one, but may be implemented by a universal interface such as RS-232C, USB (Universal Serial Bus), and IEEE1394. In this case, data other than MIDI message data may be transmitted and received simultaneously via the MIDI I/F 11.

As mentioned above, the communication I/F 12 is connected to the communication network 101 which may be a LAN (Local Area Network), the Internet, a telephone line, or the like, for connection to the server 102 via the communication network 101. When the above programs and various parameters are not stored in the external storage device 10, the communication I/F 12 is used to download such programs and parameters from the server 102. A computer as a client (the electronic music apparatus in the present embodiment) transmits a command for downloading one or more programs and parameters to the server 102 via the communication I/F 12 and the communication network 101. In response to the command, the server 102 distributes the requested programs and parameters to the computer via the communication network 101, and the computer receives the programs and parameters via the communication I/F 12 and stores them in the external storage device 10, thus completing the download.

As will be understood from the above described construction, the electronic music apparatus according to the present embodiment is constructed on an electronic musical instrument. However, this is not limitative, but the electronic music instrument according to the present invention may be constructed on a dedicated apparatus other than an electronic musical instrument or on a general-purpose personal computer. The dedicated apparatus other than an electronic musical instrument includes a tone generator apparatus, effector, mixer, recorder, automatic performance piano, karaoke machine, game machine, portable communication terminal, and so forth.

Control processes executed by the electronic music apparatus constructed as described above will be first briefly described with reference to FIG. 2 and then described in detail with reference to FIGS. 3A to 5.

FIG. 2 is a block diagram showing the functional configurations of the electronic music apparatus according to the present embodiment and the server 102, and is useful in explaining the control processes executed by the electronic music apparatus according to the present embodiment and the server 102.

As shown in FIG. 2, a contents file 102a comprised of a plurality of streaming contents and a plurality of download contents, and a management information file 102b comprised of management information associated with the respective streaming contents in the contents file 102a and management information associated with the respective download contents in the contents file 102a are stored in advance, for example, in an external storage device, not shown, within the server 102. Here, the streaming contents are contents for streaming distribution, and in the present embodiment, the streaming contents do not include sample contents. The download contents are contents for download distribution, and in the present embodiment, the download contents include two types, i.e. regular contents and sample contents. Specific examples of the management information include purchase/trial information indicative of whether the associated content is for purchasing (i.e. regular content) or for trial (free of charge), and usage limitation information indicative of whether or not a limitation is imposed upon the usage of the associated content as well as the contents of limitation if such limitation is imposed. The purchase/trial information also includes a charge to be paid if the associated content is for purchasing. Further, specific examples of the contents of limitation include the number of reproducible bars or parts, the number of displayable bars or parts, and the number of bars or parts that can be subjected to a performance lesson.

Although in the present embodiment, only regular contents are used as the streaming contents, regular contents may be added as the streaming contents.

It goes without saying that the definitions of the management file and the contents file are not limited to the above-mentioned ones. For example, the contents file may be comprised of a plurality of contents of a single type, instead of the two types of streaming contents and download contents as in the present embodiment, and if a content and a distribution method therefor are designated, the designated content may be distributed in the designated method. This is because a content may be handled as either a streaming content or a download content by changing the manner of distribution (control manner) for the same data format of content without changing the data format of content according to the type of distribution method. While in the present embodiment, the contents file is comprised of two types of contents, i.e. streaming contents and download contents, content type information indicative of whether a content is a streaming content or a download content may be included in management information associated with the content, instead of determining the content type directly from the content itself.

The electronic music apparatus according to the present embodiment mainly performs the following three types of processing:
(1) Processing for displaying a score for a streaming content and carrying out a performance lesson based on the streaming content;
(2) Processing for automatic performance of the download content; and
(3) Processing for displaying a score for the download content and carrying out a performance lesson based on the download content

Although the electronic music apparatus according to the present embodiment carries out processing for automatic performance of a streaming content, it is quite a matter of course that a streaming content is automatically reproduced, which does not constitute a feature of the present invention, and description of which is omitted.

When a user instructs to display a score for a streaming content or carry out a performance lesson based on the same, this instruction is transmitted to the server 102, which in turn reads out the streaming content and its associated management information from the contents file 102a and the management information file 102b, respectively, and distributes them by streaming distribution to the electronic music apparatus according to the present embodiment. Responsive to this, the electronic music apparatus according to the present embodiment carries out the above processing (1) for display of a score for the streaming content and a performance lesson based thereon. More specifically, the streaming content distributed by streaming distribution is stored in a temporary memory area 7a reserved on the RAM 7 for example, and this streaming content is used to carry out one of the score display and the performance lesson that is designated by the user.

Further, when the user instructs reproduction of a download content on the electronic music apparatus according to the present embodiment, this instruction is transmitted to the server 102, which in turn reads out the download content and its associated management information from the contents file 102a and the management information file 102b, respectively, and distributes them by download distribution to the electronic music apparatus according to the present embodiment. Responsive to this, the electronic music apparatus according to the present embodiment carries out the above processing (2) for automatic performance of the download content. More specifically, after the download content distributed by download distribution is stored, for example, in a storage medium 10a within the external storage device 10, the download content is loaded into the temporary memory area 7a, and the download content is automatically reproduced. In the present embodiment, the storage medium 10a may be implemented, for example, by a removable readable/writable storage medium such as a flexible disk, a magnetic-optical disk, a CD-RW, a DVD-RAM, a DVD-RW, a DVD+RW, or a memory card. It goes without saying that the storage medium 10a need not be a removable type insofar as it is readable and writable.

Furthermore, when the user instructs to display a score for a download content or carry out a performance lesson based on the same, this instruction is transmitted to the server 102, which in turn reads out the download content and its associated management information from the contents file 102a and the management information file 102b, respectively, and distributes them by download distribution to the electronic music apparatus according to the present embodiment. Responsive to this, the electronic music apparatus according to the present embodiment carries out the above processing (3) for display of a score for the download content and a performance lesson based thereon. More specifically, the download content distributed by download distribution is stored in the storage medium 10a, and then stored in the temporary memory area 7a so that this download content is used to carry out one of the score display and the performance lesson that is designated by the user.

The above control processes will be described in detail hereinbelow.

FIGS. 3A and 3B are flowchart showing a process on a content distributed by streaming distribution, executed by the electronic music apparatus, particularly the CPU 5, and a process executed by the server 102 in association with the process. Among the processes shown in FIGS. 3A and 3B, the process on a content distributed by streaming distribution includes the following types of processing:
(a) Processing for instructing streaming distribution of a content;
(b) Processing for receiving the content distributed by streaming distribution;
(c) Processing for reproducing the content, displaying a score for the content and carrying out a performance lesson based on the content;
(d) Processing for loading the content;
(e) Processing responsive to reinstruction for download distribution/streaming distribution; and
(f) Processing responsive to a start instruction

The processing (a) to the processing (c) correspond to the processing (1) for displaying a score for a streaming content and carrying out a performance lesson based on the streaming content.

In the processing (a) for instructing streaming distribution of a content, when the user designates a content desired to be distributed and one of the processing for displaying a score for the content and the processing for carrying out a performance lesson based on the content, the designations are notified to the server 102 (step S1), and the temporary memory area 7a is initialized (cleared) (step S2). How to use the content (reproduction/score display/performance lesson) need not be notified to the server 102, but only the content desired to be distributed may be notified (This also applies to steps S31 and S41, referred to later). As a method of designating a content to be distributed by streaming distribution, it is preferable that an inquiry is made of the server 102 about titles of contents that can be streaming-distributed, and based on a response from the server 102, a list of the titles of the contents is displayed, and a desired content is selected from the list and designated. Another preferable method is that the user is prompted to input a keyword for searching for a content desired to be streaming-distributed, and based on the input keyword, the contents file 102a stored in the server 102 is retrieved, a list of the results of retrieval (the titles of contents) is displayed, and a desired content is selected from the list and designated. A preferable method of designating one of the processing for displaying a score for a content and the processing for carrying out a performance lesson based on the content is that a button for selection of display of a score and a button for selection of a performance lesson are displayed in the vicinity of the list of the titles of contents, and one of the two types of processing is selected and designated by pressing one of the buttons.

In the processing (b) for receiving the content that is streaming-distributed, upon receiving the designation made in the step S1, the server 102 charges for streaming distribution of the designated content (step S101), and then distributes the designated content by streaming distribution (step S102). Upon receiving the designated content, the electronic music apparatus stores the content in the temporary memory area 7a (step S3). Here, the streaming charge, which is written in management information associated with the designated content, is charged to the electronic music apparatus to which the content is distributed by streaming distribution.

In the processing (c) for content reproduction/score display/performance lesson, when the designated processing is the reproduction processing, the content stored in the temporary memory area 7a is read out and reproduced (step S4 → step S5); when the designated processing is the score display processing, the content stored in the temporary memory area 7a is read out and a score is displayed (step S4 → step S6); and when the designated processing is the performance lesson processing, the content stored in the temporary memory area 7a is read out and a performance lesson is carried out based on the content (step S4 → step S7). Here, examples of the score display include ordinary score display in which notes and musical symbols are displayed on a music note, and tabulature display, and piano roll display. Examples of the performance lesson include a lesson carried out such that guide lights, not shown, arranged in association with the respective keys of the keyboard are turned on/off, a lesson carried out such that a piano roll displayed on the display device 9 is vertically scrolled to guide performance operators (keys of the keyboard) to be operated, and a lesson carried out such that coincidence between automatic performance and performance by the user is determined, and based on the determination result, the tempo and progression of the automatic performance are controlled or the performance by the user is scored. The score display and the performance lesson are not limited to a musical type and may be a game type. In the present embodiment, contents that are streaming-distributed are only regular contents and do not include sample contents, and therefore, among the processes on contents that are streaming-distributed, the reproduction/score display/performance lesson processing (c) does not involve processing on sample contents. However, as described later, the content reproduction/score display/performance lesson processing (c) is also carried out on sample contents that are download-distributed; and therefore the processing on download-distributed sample contents will be described here. That is, in the case where a content loaded in the temporary memory area 7a is a sample content, management information associated with this content includes usage limitation information. Therefore, in this case, the content reproduction/score display/performance lesson processing is carried out based on the usage limitation. More specifically, if the usage limitation information includes at least one of the number of reproducible bars or parts, the number of displayable bars or parts, and the number of bars or parts that can be subjected to a performance lesson as mentioned earlier, the content reproduction/score display/performance lesson processing is carried out over the number of bars or parts concerned. If a sample content in question is not a regular content provided with usage limitation, namely, if the sample content has been created from an extracted part of a regular content, the sample content need not be subjected to the above processing with usage limitation.

In the processing (d) for loading the content, when the user designates a content stored in the storage medium 10a and instructs to load the same, the temporary memory area 7a is initialized (cleared) (step S8 → step S9), and the designated content is loaded into the temporary memory area 7a (step S10). As described earlier with reference to FIG. 2, the storage medium 10a stores a regular content and a sample content that have been download-distributed, and therefore in the content loading processing (d), the user can designate either a regular content or a sample content as desired. Accordingly, a regular content and a sample content that have once been download-distributed can be loaded into the temporary memory area 7a without an instruction for download distribution being given again. Thus, a regular content and a sample content that have once been download-distributed can be repeatedly subjected to the reproduction/score display/performance lesson processing (c) without redundant communication processing, i.e. a further download distribution being carried out.

In the processing (e) responsive to reinstruction for download distribution/streaming distribution, when the user instructs for streaming distribution again, the process proceeds to the step S1; when the user instructs for download distribution of a sample content again, the process proceeds to a step S31 in FIG. 4; and when the user instructs for download distribution of a regular content again, the process proceeds to a step S41 in FIG. 5. Thus, if the user is not satisfied with a streaming-distributed content, for example, he can instruct the server 102 to distribute a new content.

In the processing (f) responsive to a start instruction, when the user designates one of content reproduction, score display, and carrying out a performance lesson and instructs start of the designated processing, the process proceeds from a step S13 to the step S4, wherein the designated one of content reproduction, score display, and carrying out a performance lesson is carried out on a content loaded into the temporary memory area 7a by the content loading processing (d). Thus, for a regular content or a sample content which has been once download-distributed, any of content reproduction, score display, and carrying out a performance lesson can be repeatedly carried out a desired number of times without carrying out redundant communication processing, i.e. further download distribution.

Although in the present embodiment, as the streaming content, only a content that is stored in the temporary memory area 7a and not in the storage medium 10a is given as an example, also a content that is conditionally stored in the storage medium 10a may be handled as a streaming content. Such conditions may include a condition that the content is erased when a predetermined time period (e.g. 72 hours) elapses after it was stored in the storage medium, and a condition that the content is erased when it has been used a predetermined number of times (e.g. 3).

In this way, according to the process carried out on a content that is streaming-distributed, the streaming-distributed content is stored in the temporary memory area 7a, and this content is used for score display or a performance lesson. As a result, performance practice can be performed using a streaming content, which were conventionally used only for reproduction. It should be noted that in many cases, a copyright on a regular streaming content is licensed at a lower royalty than a regular download content, and therefore the present invention is useful for carrying out performance practice using many streaming contents at low costs. But, usage limitation is imposed upon streaming contents, that is, they cannot be stored in the storage medium.

FIG. 4 is a flowchart showing part of a process on a sample content distributed by download distribution, executed by the electronic music apparatus according to the present embodiment, particularly the CPU 5, and a process executed by the server 102 in association with the process executed by the electronic music apparatus. Among the processes shown in FIG. 4, the part of the process on a sample content distributed by download distribution includes the following types of processing:
(g) Processing for instructing download distribution of a sample content; and
(h) Processing for receiving the download-distributed sample content

The above types of processing (g) and (h) and the aforedescribed types of processing (c) to (f) are the total process carried out on sample contents that are download-distributed. The types of processing (g), (h) and (c) correspond to the processing (2) for automatic reproduction of a download content and the processing on a sample content out of the processing (3) for score display/performance lesson on a download content. In the processing (g) for instructing download distribution of a sample content, when the user designates a sample content desired to be download-distributed and one of content reproduction, score display, and performance lesson, the designations are notified to the server 102 (step S31).

In the processing (h) for receiving the download-distributed sample content, when in response to the designations in the step S31, the server 102 carries out download distribution of the designated sample content (step S111), the electronic music apparatus receives the download-distributed sample content and stores the same in the storage medium 10a (step S32). Next, the temporary memory area 7a is initialized (cleared) (step S32), and then the sample content stored in the storage medium 10a is read out and stored in the temporary memory area 7a (step S34).

When the receiving processing (h) for the download-distributed sample content is completed, the process proceeds to the step S4 in FIG. 3B, followed by one of the types of processing (c) to (f) being carried out on the sample content.

In this way, according to the process carried out on a sample content that is download-distributed, the download-distributed sample content is stored in the storage medium 10a, then automatically loaded into the temporary memory area 7a, and reproduction of the sample content is started. Thus, merely by instructing download distribution of a sample content, download distribution of the sample content is not only carried out but also reproduction of the same is started. Further, since after the download-distributed sample content is stored in the storage medium 10a, it is automatically loaded into the temporary memory area 7a, and score display or a performance lesson is carried out using the sample content, it is possible to carry out performance practice using the sample content. In many cases, a copyright on a sample content is licensed free of charge, and therefore the present invention is useful for carrying out performance practice using many sample contents free of charge. But, usage limitation is imposed upon sample contents, that is, for a sample content, only part of a regular content can be used.

FIG. 5 is a flowchart showing a process on a regular content distributed by download distribution, executed by the electronic music apparatus according to the present embodiment, particularly the CPU 5, and a process executed by the server 102 in association with the process executed by the electronic music apparatus. Among the processes shown in FIG. 5, the process on a regular content distributed by download distribution includes the following types of processing:
(i) Processing for instructing download distribution of a regular content; and
(j) Processing for receiving the download-distributed regular content

The above types of processing (i) and (j) and the aforedescribed types of processing (d) to (f) are the total process carried out on regular contents that are download-distributed.

In the processing (i) for instructing download distribution of a regular content, when the user designates a regular content desired to be download-distributed, the designation is notified to the server 102 (step S41).

In the processing (j) for receiving the download-distributed regular content, when in response to the designation in the step S41, the server 102 charges for download distribution of the designated regular content (step S121), and then distributes the designated regular content by download distribution (step S122), the electronic music apparatus receives the distributed content and stores the same in the storage medium 10a (step S42).

When the receiving processing (j) for the download-distributed regular content is completed, the process proceeds to the step S8 in FIG. 3B, followed by one of the types of processing (d) to (f) being carried out on the regular content.

In this way, according to the process on a regular content that is download-distributed, as is distinct from the aforedescribed process on a sample content that is download-distributed, none of reproduction, score display, and performance lesson are carried out, but the download-distributed regular content is only stored in the storage medium 10a. However, this is not limitative, and as is the case with the process on a sample content that is download-distributed, a download-distributed regular content may be processed such that, after being stored in the storage medium 10a, one of the reproduction, score display, and performance lesson may be carried out using the regular content.

It is to be understood that the object of the present invention may also be accomplished by supplying a system or an apparatus with a storage medium (or a recording medium) in which a program code of software, which realizes the functions of the above described embodiment is stored, and causing a computer (or CPU 5 or MPU) of the system or apparatus to read out and execute the program code stored in the storage medium.

In this case, the program code itself read from the storage medium realizes the functions of the above described embodiment, and hence the program code and the storage medium in which the program code is stored constitute the present invention.

Examples of the storage medium for supplying the program code include a floppy (registered trademark) disk, a flexible disk, a hard disk, an optical disk, a magnetic-optical disk, a CD-ROM, a CD-R, a CD-RW, a DVD-ROM, a DVD-RAM, a DVD-RW, or a DVD+RW, a magnetic tape, a nonvolatile memory card, and a ROM. Alternatively, the program may be downloaded from a server computer via a communication network.

Further, it is to be understood that the functions of the above described embodiment may be accomplished not only by executing the program code read out by a computer, but also by causing an OS (operating system) or the like which operates on the computer to perform a part or all of the actual operations based on instructions of the program code.

Further, it is to be understood that the functions of the above described embodiment may be accomplished by writing the program code read out from the storage medium into a memory provided on an expansion board inserted into a computer or in an expansion unit connected to the computer and then causing a CPU or the like provided in the expansion board or the expansion unit to perform a part or all of the actual operations based on instructions of the program code.

## Claims

1. An electronic music apparatus comprising:
a designating device that designates a sample content as an object for download distribution;
a receiving device that receives the sample content designated by said designating device and distributed by download distribution;
a storage device that stores the sample content received by said receiving device in a storage medium;
a temporary memory that temporarily stores the sample content;
a readout device that automatically reads out the sample content stored in the storage medium and stores the sample content read out in said temporary memory; and
a reproduction device that automatically reproduces the sample content stored in said temporary memory.

2. An electronic music apparatus comprising:
a designating device that designates a sample content as an object for download distribution and instructs to use the sample content for score display or a performance lesson;
a receiving device that receives the sample content designated by said designating device and distributed by download distribution;
a storage device that stores the sample content received by said receiving device in a storage medium;
a temporary memory that temporarily stores the sample content;
a readout device that reads out the sample content stored in the storage medium and stores the sample content read out in said temporary memory; and
a control device that is responsive to the instruction to use the sample content stored in said temporary memory for score display or a performance lesson, for providing control to display a score for the sample content or carry out a performance lesson based on the sample content.

3. An electronic music apparatus as claimed in claim 2, wherein the sample content has appended thereto usage limitation information indicative of contents of limitation on usage of the sample content, and said control device limits execution of the score display or the performance lesson based on the usage limitation information.

4. An electronic music apparatus as claimed in claim 3, wherein the usage limitation information comprises at least one of a number of reproducible bars or parts, a number of displayable bars or parts, and a number of bars or parts that can be subjected to the performance lesson.

5. An electronic music apparatus comprising:
a designating device that designates a content as an object for streaming distribution and instructs to use the content for score display or a performance lesson;
a receiving device that receives the content designated by said designating device and distributed by streaming distribution;
a temporary memory that temporarily stores the content received by said receiving device; and
a control device that is responsive to the instruction to use the content stored in said temporary memory for score display or a performance lesson, for providing control to display a score for the content or carry out a performance lesson based on the content.

6. A control method for an electronic music apparatus, comprising:
a receiving step of receiving a sample content designated by a designating device that designates the sample content as an object for download distribution and distributed by download distribution;
a storage step of storing the sample content received in said receiving step in a storage medium;
a readout step of automatically reading out the sample content stored in the storage medium and storing the sample content read out in a temporary memory; and
a reproduction step of automatically reproducing the sample content stored in the temporary memory.

7. A control method for an electronic music apparatus, comprising:
a receiving step of receiving a sample content designated by a designating device that designates the sample content as an object for download distribution and instructs to use the sample content for score display or a performance lesson and distributed by download distribution;
a storage step of storing the sample content received in said receiving step in a storage medium;
a readout step of reading out the sample content stored in the storage medium and storing the sample content read out in a temporary memory; and
a control step of providing control to display a score for the sample content stored in the temporary memory or carry out a performance lesson based on the sample content, in response to the instruction to use the sample content for score display or a performance lesson by the designating device.

8. A control method for an electronic music apparatus, comprising:
a receiving step of receiving a content designated by a designating device that designates the content as an object for streaming distribution and instructs to use the content for score display or a performance lesson and distributed by streaming distribution;
a temporary storage step of temporarily storing the content received in said receiving step in a temporary memory; and
a control step of providing control to display a score for the content stored in the temporary memory or carry out a performance lesson based on the sample content, in response to the instruction to use the content for score display or a performance lesson by the designating device.

9. A program for causing a computer to execute a control method for an electronic music apparatus, the method comprising:
a receiving step of receiving a sample content designated by a designating device that designates the sample content as an object for download distribution and distributed by download distribution;
a storage step of storing the sample content received in said receiving step in a storage medium;
a readout step of automatically reading out the sample content stored in the storage medium and storing the sample content read out in a temporary memory; and
a reproduction step of automatically reproducing the sample content stored in the temporary memory.

10. A program for causing a computer to execute a control method for an electronic music apparatus, the method comprising:
a receiving step of receiving a sample content designated by a designating device that designates the sample content as an object for download distribution and instructs to use the sample content for score display or a performance lesson and distributed by download distribution;
a storage step of storing the sample content received in said receiving step in a storage medium;
a readout step of reading out the sample content stored in the storage medium and storing the sample content read out in a temporary memory; and
a control step of providing control to display a score for the sample content stored in the temporary memory or carry out a performance lesson based on the sample content, in response to the instruction to use the sample content for score display or a performance lesson by the designating device.

11. A program for causing a computer to execute a control method for an electronic music apparatus, the method comprising:
a receiving step of receiving a content designated by a designating device that designates the content as an object for streaming distribution and instructs to use the content for score display or a performance lesson and distributed by streaming distribution;
a temporary storage step of temporarily storing the content received in said receiving step in a temporary memory; and
a control step of providing control to display a score for the content stored in the temporary memory or carry out a performance lesson based on the sample content, in response to the instruction to use the content for score display or a performance lesson by the designating device.
